# EUROPEAN PATENT APPLICATION

(11) **EP 4 765 074 A1**
(43) Date of publication of application: **24.06.2026**
(21) Application number: 25738903.1
(22) Date of filing: 07.01.2025
(51) Int. Cl.: G09B 9/00, G09B 5/02, G06F 3/01, H01M 10/04

(54) **SIMULATION SYSTEM AND OPERATION METHOD OF SIMULATION SYSTEM**

(30) Priority: 11.01.2024 KR 20240004688
(71) Applicant: LG Energy Solution, Ltd., Seoul 07335 (KR)
(72) Inventor: KIM, Dae Cheon, Daejeon 34122 (KR); KIM, Eung Seo, Daejeon 34122 (KR); PARK, Dae Hyun, Daejeon 34122 (KR); KIM, Jong Seong, Daejeon 34122 (KR)
(74) Representative: BCKIP Part mbB
(86) International application number: PCT/KR2025/000280
(87) International publication number: WO 2025/150829

(57) **Abstract**

According to some embodiments, a simulation system includes an interface panel configured to receive manipulation inputs from an operator; a main simulator configured to load training contents that reproduces processes for manufacturing a cylindrical battery through electrode etching based on the manipulation inputs and provide the training contents to the operator through interaction with the operator; and a display configured to display detailed images of the processes based on characteristics of the training contents.

## Description

### CROSS-REFERENCE TO RELATED APPLICATION

The present application claims the benefit of the priority of Korean Patent Application No. 10-2024-0004688, filed on January 11, 2024, which is hereby incorporated by reference in its entirety.

### TECHNICAL FIELD

The embodiments disclosed herein relate to a simulation system and a method of operating the simulation system.

### BACKGROUND ART

In recent years, research and development for secondary batteries have been actively conducted. Here, secondary batteries are batteries capable of being recharged and discharged, and may be interpreted to encompass both conventional Ni/Cd batteries, Ni/MH batteries, or the like, and recent lithium ion batteries. Among secondary batteries, lithium ion batteries may have a higher energy density than conventional Ni/Cd batteries, Ni/MH batteries, or the like, and may be manufactured to be small and lightweight, so the lithium ion batteries may have high usability as a power source for mobile devices. In recent years, the lithium ion batteries have expanded their range of use to power sources for electric vehicles, making the batteries attract attention as a next-generation energy storage medium.

A manufacturing process for a cylindrical battery cell may include a process of stacking electrodes and a separator, a process of winding an assembly of the electrodes and the separator, a process of sealing a wound jelly roll into a battery can, and the like. The can sealing process requires process dimension values, and without actually manufacturing the cell, it may be difficult to know the shape of the can according to the process dimension values. In particular, when the process dimension values are improperly set, quality issues such as scratches, dents, or the like, may occur in the cylindrical battery cell due to interference with an equipment mold.

### DISCLOSURE OF THE INVENTION

### TECHNICAL PROBLEM

The embodiments disclosed herein are directed to providing a simulation system capable of preventing interference with an equipment mold and battery cell quality issues by predicting a cell shape according to setting of process dimension values, and a method of operating the simulation system.

The technical objectives of the embodiments disclosed herein are not limited to those mentioned above, and other technical objectives not mentioned will be clearly understood by those skilled in the art from the following descriptions.

The technical problems of the embodiments disclosed herein are not limited to those mentioned above, and other objectives not mentioned will be clearly understood by those skilled in the art from the following descriptions.

### TECHNICAL SOLUTION

According to some embodiments, a simulation system includes an interface panel configured to receive, from an operator, process dimension values of simulation contents for operating a virtual facility to perform a cell packaging process and a main simulator configured to display operation processes for performing detailed processes of the cell packaging process by the virtual facility, generate detailed shapes of process results formed by the detailed processes according to the process dimension values based on a simulation model of the simulation contents, and display the detailed shapes to the operator.

According to some embodiments, the cell packaging process includes a packaging process for a cylindrical battery cell, and the packaging process for a cylindrical battery cell is configured to manufacture the cylindrical battery cell by injecting an electrode assembly and an electrolyte into a cylindrical can, coupling a cap assembly to the cylindrical can, and sealing the cylindrical can and the cap assembly.

According to some embodiments, the detailed processes include a swaging process, a beading process, a first crimping process, a second crimping process, and a sizing process.

According to some embodiments, the interface panel is configured to receive adjustment values for the process dimension values from the operator, and the main simulator is configured to display, to the operator, shapes before and after adjustment of the detailed shapes together before and after adjustment of the process dimension values by the adjustment values.

According to some embodiments, the main simulator is configured to display information about stresses occurring at contact points between mold structures and the detailed shapes of the virtual facility corresponding to the detailed processes.

According to some embodiments, the main simulator is configured to calculate a risk of an appearance defect of a battery cell according to a current state of the process dimension values based on the information about stresses.

According to some embodiments, a method of operating a simulation system includes receiving, through an interface panel, from an operator, process dimension values of simulation contents for operating a virtual facility to perform a cell packaging process, displaying, through a main simulator, operation processes for performing detailed processes of the cell packaging process by the virtual facility, generating, through the main simulator, detailed shapes of process results formed by the detailed processes according to the process dimension values based on a simulation model of the simulation contents, and displaying, through the main simulator, the detailed shapes to the operator.

According to some embodiments, the cell packaging process includes a packaging process for a cylindrical battery cell, and the packaging process for a cylindrical battery cell is configured to manufacture the cylindrical battery cell by injecting an electrode assembly and an electrolyte into a cylindrical can, coupling a cap assembly to the cylindrical can, and sealing the cylindrical can and the cap assembly.

According to some embodiments, the detailed processes include a swaging process, a beading process, a first crimping process, a second crimping process, and a sizing process.

According to some embodiments, the method further includes receiving, through the interface panel, adjustment values for the process dimension values from the operator and displaying, through the main simulator, to the operator, shapes before and after adjustment of the detailed shapes together before and after adjustment of the process dimension values by the adjustment values.

According to some embodiments, the method further includes displaying, through the main simulator, information about stresses occurring at contact points between mold structures and the detailed shapes of the virtual facility corresponding to the detailed processes.

According to some embodiments, the method further includes calculating, through the main simulator, a risk of an appearance defect of a battery cell according to a current state of the process dimension values based on the information about stresses.

### ADVANTAGEOUS EFFECTS

According to the embodiments disclosed herein, it is possible to provide a simulation system capable of preventing interference with an equipment mold and battery cell quality issues by predicting a cell shape according to setting of process dimension values, and a method of operating the simulation system.

The technical effects according to the embodiments disclosed herein are not limited to those mentioned above, and other effects not mentioned will be clearly understood by those skilled in the art from the disclosure herein.

### BRIEF DESCRIPTION OF THE DRAWINGS

FIG. 1 may illustrate an environment in which a simulation system operates according to some embodiments.
FIG. 2 may illustrate elements that constitute the simulation system according to some embodiments.
FIG. 3 may illustrate a structure of the simulation system according to some embodiments.
FIGS. 4 to 6 may illustrate process dimension values of simulation contents according to some embodiments.
FIG. 7 may illustrate a method of performing a beading process according to some embodiments.
FIG. 8 may illustrate a method of performing a first clamping process and a second clamping process according to some embodiments.
FIG. 9 may illustrate information about stress occurring at a contact point between mold structures and detailed shapes of a virtual facility according to some embodiments.
FIG. 10 may illustrate steps that constitute a method of operating a simulation system according to some embodiments.

### MODE FOR CARRYING OUT THE INVENTION

Hereinafter, embodiments disclosed in herein will be described with reference to the accompanying drawings. However, this is not intended to limit the disclosure herein to the specific embodiments, and it is to be construed to include various modifications, equivalents, and/or alternatives of embodiments disclosed herein.

It should be appreciated that embodiments herein and the terms used therein are not intended to limit the technological features set forth herein to particular embodiments and include various changes, equivalents, or replacements for a corresponding embodiment. With regard to the description of the drawings, similar or related reference numerals may be used to refer to similar or related elements. It is to be understood that a singular form of a noun corresponding to an item may include one or more of the things, unless the relevant context clearly indicates otherwise.

As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st," "2nd," "first," "second," "A," "B," "(a)," or "(b)" may be used to simply distinguish a corresponding component from another, and do not limit the components in other aspects (e.g., importance or order) unless specifically stated otherwise.

In the present specification, it is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., a compact disc read only memory and CD-ROM), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the plurality of entities may be disposed separately from other components. According to embodiments disclosed herein, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

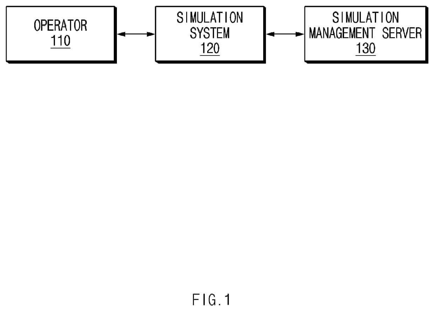

FIG. 1 may illustrate an environment in which a simulation system operates according to some embodiments.

Referring to FIG. 1, a simulation system 120 may provide simulation contents to an operator 110. A simulation management server 130 may manage the contents of the simulation system 120.

The simulation system 120 may provide simulation training on a manufacturing process of a cylindrical battery to the operator 110. According to an embodiment, the manufacturing process may include a cell packaging process. The cell packaging process may include a process of sealing an assembly of electrodes and separators wound into a jelly roll shape into a cylindrical battery can. The simulator system 120 may provide the operator 110 with a simulation of the process of sealing the battery can containing the jelly roll and an electrolyte with a battery cap in order to perform cell packaging. According to an embodiment, the simulator system 120 may provide simulation contents using a digital twin-based virtual facility.

The simulation management server 130 may be configured to manage training contents provided by the simulator system 120. The simulation management server 130 may record results of performing training contents and derive statistical data based on the results. The simulation management server 130 may add or change items of the training contents based on the statistical data and transmit the added or changed items to the simulator system 120. According to an embodiment, the simulation management server 130 may install content management software on the simulator system 120 and provide update information of the content management software.

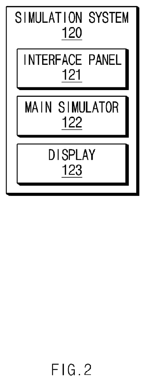

FIG. 2 may illustrate elements that constitute a simulation system according to some embodiments.

Referring to FIG. 2, the simulator system 120 may include an interface panel 121, a main simulator 122, and a display 123. However, the simulation system 120 is not limited thereto, and some elements may be omitted from the simulation system 120, or other general-purpose elements may be further included in the simulation system 120.

According to an embodiment, the interface panel 121, the main simulator 122, and the display 123 may be electrically connected to each other through a device-to-device communication method such as a bus, general purpose input and output (GPIO), serial peripheral interface (SPI), mobile industry processor interface (MIPI), or the like.

The interface panel 121 may provide an interface function between the operator 110 and the simulation system 120. For example, the interface panel 121 may be configured in the form of a human machine interface (HMI) panel. The interface panel 121 may receive operation input from the operator 110 to operate the simulation system 120 in a manner of touch input, button input, mouse input, or the like. The interface panel 121 may provide a graphical interface, such as a screen that provides selections of operation inputs.

The main simulator 122 may be configured to execute a simulation of the cell packaging process of the cylindrical battery. The main simulator 122 may interact with the operator 110 to proceed with the simulation. For example, the main simulator 122 may receive a touch input or drag input from the operator 110, proceed with the process step of the cylindrical battery accordingly, and display results generated at each process step to the operator 110. The main simulator 122 may include a processor and a memory for executing simulation software.

The processor of the main simulator 122 may have a structure for executing instructions that implement the simulation. The processor may be implemented as an array of a number of logic gates for processing various operations or as a general-purpose microprocessor, and may consist of a single processor or a plurality of processors. For example, the processor may be implemented in the form of at least one of a microprocessor, a central processing unit (CPU), a graphics processing unit (GPU), and an application processor (AP).

The memory or storage of the main simulator 122 may be configured to temporarily store data or instructions and may be configured separately from or integral with the processor. The processor may perform various operations by executing instructions stored in the memory and/or storage. The memory and/or storage may store various data, instructions, software, mobile applications, computer programs, or the like. The memory and/or storage may be implemented in a form of a nonvolatile device such as a read-only memory (ROM), a programmable ROM (PROM), an erasable programmable ROM (EPROM), an electrically erasable PROM (EEPROM), a flash memory, a parallel random-access memory (PRAM), a magneto-resistive RAM (MRAM), a resistive RAM (RRAM), a ferroelectric RAM (FRAM), or the like, or a volatile device such as a dynamic RAM (DRAM), a static RAM (SRAM), a synchronous dynamic RAM (SDRAM), a parallel RAM (PRAM), or the like, or may be implemented in a form of a hard disk drive (HDD), a solid state drive (SSD), a secure digital (SD), Micro-SD, or a combined form thereof.

The display 123 may include a display panel that provides various visual information to the operator 110. The display 123 may display detailed images of the simulation that is being executed in the main simulator 122. For example, when a cell packaging process for the cylindrical battery is performed in the main simulator 122, external images recognizable to the naked eye in each process may be displayed through the main simulator 122, and images of invisible regions that may not be recognized to the naked eye may be displayed through the display 123.

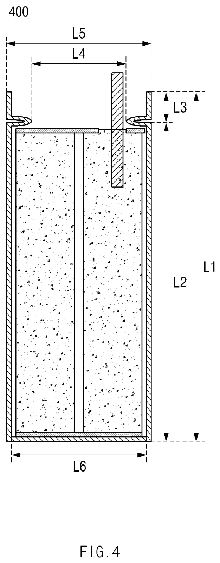

The interface panel 121 may be configured to receive, from the operator 110, process dimension values of simulation contents for operating the virtual facility to perform the cell packaging process. The operator 110 may set process dimension values corresponding to detailed processes of the cell packaging process. The process dimension values may be process parameters for determining the dimensions of the cylindrical battery cell. For example, reference may be made to FIGS. 4 to 6 described below for examples of process dimension values.

The main simulator 122 may be configured to display operation processes by which the virtual facility performs detailed processes of the cell packaging process. For example, a process of assembling a battery cap to a battery can containing a wound jelly roll and electrolyte, a process of sealing a cylindrical battery cell by applying pressure to the battery cap, a process of adjusting the size of the cylindrical battery cell, and the like, may be displayed through the main simulator 122. The operation processes may be performed by the virtual facility within the simulation contents. According to an embodiment, at least some of the operation processes may be displayed on the display 123 instead of the main simulator 122, or together with the main simulator 122.

The main simulator 122 may be configured to generate detailed shapes of process results formed by detailed processes according to process dimension values based on a simulation model of simulation contents. When process dimension values are input by the operator 110, the simulation model may generate detailed shapes of process results corresponding to the corresponding values. For example, when the dimensions of the battery can or battery cap change for a pressing operation for the same press mold, the shape obtained as a result of the pressing operation may change. The simulation model may be pre-built based on actual press mold pressing results for various dimensional values.

The main simulator 122 may be configured to display the detailed shapes to the operator 110. The operator 110 may check how the detailed shapes are formed as the results of the process dimension values he or she inputs through simulation contents. According to an embodiment, the display 123 may perform 3D modeling on the process result shape inside the battery cell, which is difficult to check with the naked eye among the detailed shapes, and display it to the operator 110.

According to an embodiment, the cell packaging process may include a packaging process for a cylindrical battery cell, and the packaging process for a cylindrical battery cell may be configured to manufacture the cylindrical battery cell by injecting an electrode assembly and an electrolyte into a cylindrical can, coupling a cap assembly to the cylindrical can, and sealing the cylindrical can and the cap assembly. Through the packaging process for a cylindrical battery cell, the electrode assembly and the electrolyte may be sealed by the cylindrical can and cap assembly. The packaging process may be reproduced as the simulation contents, which allows the operator 110 to identify variations in the detailed shapes and interference with the mold.

According to an embodiment, the detailed processes may include a swaging process, a beading process, a first crimping process, a second crimping process, and a sizing process. The swaging process may include a process of compressing the opening of the cylindrical can to reduce its outside diameter. The beading process may include a process of forming a neck at the top of the cylindrical can to facilitate coupling of the cap assembly. The first crimping process and the second crimping process may include a process of sealing by pressurizing the opening of a cylindrical can using a mold or jig. The sizing process may include a process of adjusting the overall height of the sealed cylindrical cell. The detailed processes may be reproduced as the simulation contents.

According to an embodiment, the interface panel 121 may be configured to receive adjustment values for the process dimension values from the operator 110, and the main simulator 122 may be configured to display, to the operator 110, shapes before and after adjustment of the detailed shapes together before and after adjustment of the process dimension values by the adjustment values. The operator 110 may check detailed shapes corresponding to the current process dimension values through the simulation system 120, and may set the adjustment values for the process dimension values in response thereto. For example, when scratches or dents occur in the battery cell due to excessively large dimensions, the operator 110 may reduce the process dimension values. As the process dimension values are adjusted, the main simulator 122 may display results of the adjustment. By displaying the shapes before and after adjustment together, the operator 110 may optimize the process dimension values to most appropriate values.

According to an embodiment, the main simulator 122 may be configured to display information about stresses occurring at contact points between mold structures and detailed shapes of the virtual facility corresponding to the detailed processes. When interference occurs between mold structures and the detailed shapes, stress may be generated at the contact points. The main simulator 122 may display the intensity of stress corresponding to interference through the simulation model. The simulation model may be configured to determine the intensity of interference based on size differences between the mold structures and detailed shapes.

According to an embodiment, the main simulator 122 may be configured to calculate the risk of an appearance defect of the battery cell according to a current state of process dimension values based on the information about stresses. Based on the information about stresses, the risk of scratches or dents on a surface of the battery cell due to the pressure of the mold press may be calculated. For example, the risk of the appearance defect may include a probability of occurrence of a scratch or dent and/or a severity of a scratch or dent. The risk of the appearance defect may be calculated by the simulation model of the simulation contents. The operator 110 may check the risk of the appearance defect, and may adjust the process dimension values in a direction to lower a value of the risk.

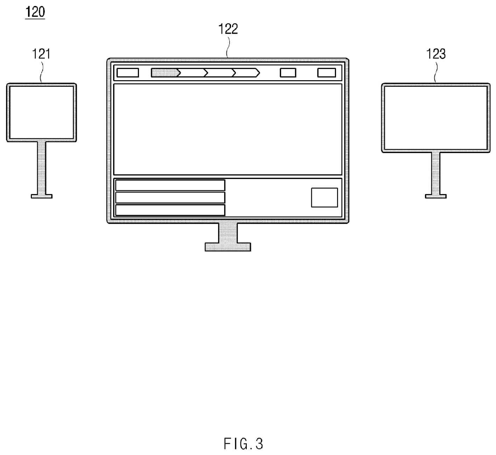

FIG. 3 may illustrate a structure of the simulation system according to some embodiments.

Referring to FIG. 3, in the simulation system 120, the interface panel 121 may be disposed on the left side of the main simulator 122, and the display 123 may be disposed on the right side of the main simulator 122. However, the simulation system 120 is not limited thereto, and a different disposition structure may be applied depending on the physical structure or movement line of the operator 110.

The operator 110 may generate an operation input for operating the virtual facilities of the main simulator 122 in the interface panel 121 on the left , may perform training with the simulation contents through touch and drag inputs on the main simulator 122 in the center, and may check detailed images of the battery manufacturing process through the display 123 on the right.

FIGS. 4 to 6 may illustrate process dimension values of simulation contents according to some embodiments.

Referring to FIG. 4, a first cross-sectional view 400 illustrating process dimension values of simulation contents may be illustrated. The first cross-sectional view 400 may represent a first process dimension value L1 to a sixth process dimension value L6. The first process dimension value L1 may represent the overall height of the cell, and the second process dimension value L2 may represent the height of the body. The third process dimension value L3 may represent the height of a head portion, and the fourth process dimension value L4 may represent the inner diameter of a beading portion. The fifth process dimension value L5 may represent the outer diameter of the head portion, and the sixth process dimension value L6 may represent the outer diameter of a shoulder portion.

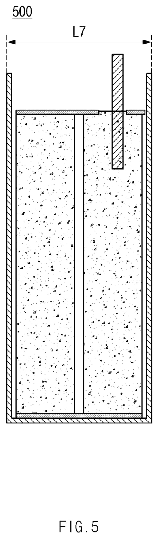

Referring to FIG. 5, a second cross-sectional view 500 illustrating process dimension values of simulation content may be illustrated. The second cross-sectional view 500 may represent a seventh process dimension value L7. The seventh process dimension value L7 may represent the outer diameter of the opening of the cylindrical can.

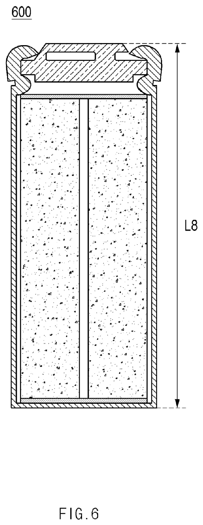

Referring to FIG. 6, a third cross-sectional view 600 illustrating process dimension values of simulation contents may be illustrated. The third cross-sectional view 600 may represent an eighth process dimension value L8. The eighth process dimension value L8 may represent the overall size of the cylindrical battery cell.

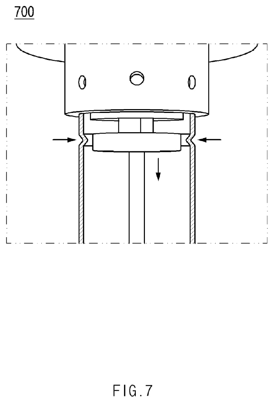

FIG. 7 may illustrate a method of performing a beading process according to some embodiments.

Referring to FIG. 7, a method of performing a beading process 700 may be exemplified. The beading process 700 may be configured to form a neck at the top of a cylindrical can to allow smooth attachment of a cap assembly to the cylindrical can.

In the beading process 700, a jelly roll injected into the cylindrical can may be pressurized by a sleeve and a pusher, and at the same time, vertical pressure may be applied to the upper portion of the cylindrical can. As a result, a neck portion that separates a portion where the jelly roll is located and a portion where the cylindrical can is coupled to the cap assembly may be formed.

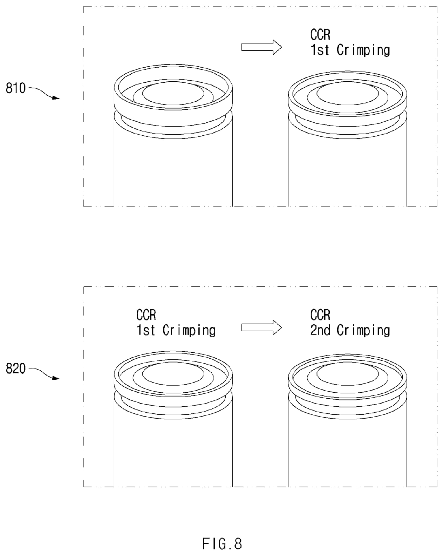

FIG. 8 may illustrate a method of performing a first clamping process and a second clamping process according to some embodiments.

Referring to FIG. 8, a method of performing a first clamping process 810 and a second clamping process 820 may be exemplified.

The first clamping process 810 and the second clamping process 820 may be sequentially performed. The first clamping process 810 and the second clamping process 820 may apply pressure to an upper portion located higher than a neck of a cylindrical can and a cap assembly accommodated within the upper portion to deform the pressurized portion. The deformed pressurized portion may be rolled into a central portion of a cell, thereby sealing a jelly roll and electrolyte inside the cell.

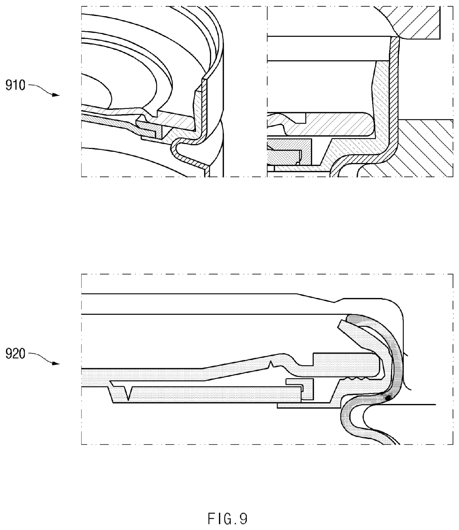

FIG. 9 may illustrate information about stress occurring at a contact point between mold structures and detailed shapes of a virtual facility according to some embodiments.

Referring to FIG. 9, a first cross-sectional view 910 and a second cross-sectional view 920 may be illustrated to illustrate information about stress occurring at the contact point between the mold structures and the detailed shapes of the virtual facility.

The first cross-sectional view 910 may show a structure in which a cap assembly is accommodated in an upper portion of a neck after the neck is formed through a beading process. The second cross-sectional view 920 may show a state in which a first clamping process and/or a second clamping process is performed in a structure of the first cross-sectional view 910.

The second cross-sectional view 920 may display information about the stress formed in each portion of a cylindrical can and cap assembly. In some embodiments, the information about stress may be visually represented through different colors, brightness, or the like. The operator 110 may visually check the information about stress and, based on the checked information, adjust process dimension values to relieve a region where excessive stress has occurred.

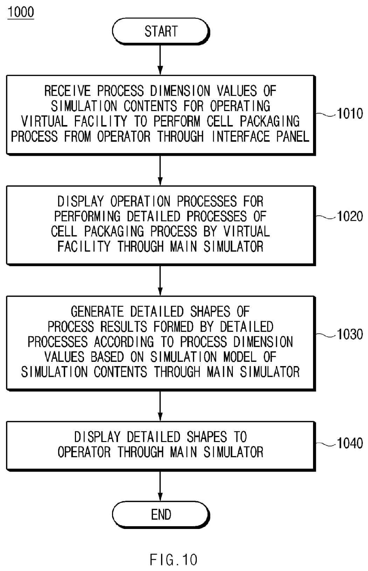

FIG. 10 may illustrate steps that constitute a method of operating a simulation system according to some embodiments.

Referring to FIG. 10, a method 1000 of operating the simulation system may include steps 1010 to 1040. However, the method is not limited thereto, and some steps may be omitted or other general steps may be added, and steps of the method 1000 of operating the simulation system may be executed in a different order from the illustrated order.

The method 1000 of operating the simulation system may include steps that are processed in time series in the simulation system 120. Therefore, even though the content is omitted below, the content described above for the simulation system 120 may be equally applied to the method 1000 of operating the simulation system.

The steps 1010 to 1040 of the method 1000 of operating the simulation system may be performed by the interface panel 121, the main simulator 122, and the display 123 of the simulation system 120.

In step 1010, the simulation system 120 may perform a step of receiving process dimension values of simulation contents for operating a virtual facility to perform a cell packaging process from an operator through the interface panel.

In step 1020, the simulation system 120 may perform a step of displaying the operation processes for performing detailed processes of the cell packaging process by the virtual facility through the main simulator.

In step 1030, the simulation system 120 may perform a step of generating detailed shapes of process results formed by the detailed processes according to the process dimension values based on a simulation model of the simulation contents through the main simulator.

In step 1040, the simulation system 120 may perform a step of displaying the detailed shapes to the operator through the main simulator.

According to an embodiment, the method 1000 of operating the simulation system may be implemented in the form of a computer program stored in a computer-readable storage medium. That is, the computer program may include commands for implementing the method 1000 of operating the simulation system, and the commands of the program may be stored in the computer-readable storage medium. The computer program may include a mobile application.

In an embodiment, a computer-readable storage medium may include magnetic media such as hard disks, floppy disks, and magnetic tapes, optical media such as CD-ROMs and DVDs, magneto-optical media such as floptical disks, and a hardware device specially configured to store and execute computer program instructions, such as ROM, RAM, flash memory, or the like. Computer program instructions may include machine language code generated by a compiler and high-level language code that may be executed by a computer using an interpreter, or the like.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

### (Reference Signs List)

| | | | |
|---|---|---|---|
| 110: | Operator | 120: | Simulation system |
| 130: | Simulation management server | 121: | Interface panel |
| 122: | Main simulator | 123: | Display |

## Claims

1. A simulation system comprising:
an interface panel configured to receive, from an operator, process dimension values of simulation contents for operating a virtual facility to perform a cell packaging process; and
a main simulator configured to display operation processes for performing detailed processes of the cell packaging process by the virtual facility, generate detailed shapes of process results formed by the detailed processes according to the process dimension values based on a simulation model of the simulation contents, and display the detailed shapes to the operator.

2. The simulation system of claim 1, wherein the cell packaging process includes a packaging process for a cylindrical battery cell, and
the packaging process for a cylindrical battery cell is configured to manufacture the cylindrical battery cell by injecting an electrode assembly and an electrolyte into a cylindrical can, coupling a cap assembly to the cylindrical can, and sealing the cylindrical can and the cap assembly.

3. The simulation system of claim 2, wherein the detailed processes include a swaging process, a beading process, a first crimping process, a second crimping process, and a sizing process.

4. The simulation system of claim 1, wherein the interface panel is configured to receive adjustment values for the process dimension values from the operator, and
the main simulator is configured to display, to the operator, shapes before and after adjustment of the detailed shapes together before and after adjustment of the process dimension values by the adjustment values.

5. The simulation system of claim 1, wherein the main simulator is configured to display information about stresses occurring at contact points between mold structures and the detailed shapes of the virtual facility corresponding to the detailed processes.

6. The simulation system of claim 5, wherein the main simulator is configured to calculate a risk of an appearance defect of a battery cell according to a current state of the process dimension values based on the information about stresses.

7. A method of operating a simulation system, comprising:
receiving, through an interface panel, from an operator, process dimension values of simulation contents for operating a virtual facility to perform a cell packaging process;
displaying, through a main simulator, operation processes for performing detailed processes of the cell packaging process by the virtual facility;
generating, through the main simulator, detailed shapes of process results formed by the detailed processes according to the process dimension values based on a simulation model of the simulation contents; and
displaying, through the main simulator, the detailed shapes to the operator.

8. The method of claim 7, wherein the cell packaging process includes a packaging process for a cylindrical battery cell, and
the packaging process for a cylindrical battery cell is configured to manufacture the cylindrical battery cell by injecting an electrode assembly and an electrolyte into a cylindrical can, coupling a cap assembly to the cylindrical can, and sealing the cylindrical can and the cap assembly.

9. The method of claim 8, wherein the detailed processes include a swaging process, a beading process, a first crimping process, a second crimping process, and a sizing process.

10. The method of claim 7, further comprising:
receiving, through the interface panel, adjustment values for the process dimension values from the operator; and
displaying, through the main simulator, to the operator, shapes before and after adjustment of the detailed shapes together before and after adjustment of the process dimension values by the adjustment values.

11. The method of claim 7, further comprising displaying, through the main simulator, information about stresses occurring at contact points between mold structures and the detailed shapes of the virtual facility corresponding to the detailed processes.

12. The method of claim 11, further comprising calculating, through the main simulator, a risk of an appearance defect of a battery cell according to a current state of the process dimension values based on the information about stresses.
